(19) **Europäisches Patentamt / European Patent Office / Office européen des brevets**

(11) **EP 4 165 597 B1**

(12) # EUROPEAN PATENT SPECIFICATION

(45) Date of publication and mention
of the grant of the patent:
**05.11.2025 Bulletin 2025/45**

(21) Application number: **20743267.5**

(22) Date of filing: **16.06.2020**

(51) International Patent Classification (IPC):
**G06T 7/579** (2017.01)

(52) Cooperative Patent Classification (CPC):
**G06T 7/579; G06T 2207/30252**

(86) International application number:
**PCT/IB2020/055617**

(87) International publication number:
**WO 2021/255495 (23.12.2021 Gazette 2021/51)**

(54) **METHOD AND SYSTEM FOR GENERATING A THREE-DIMENSIONAL MODEL BASED ON SPHERICAL PHOTOGRAMMETRY**

VERFAHREN UND SYSTEM ZUR ERZEUGUNG EINES DREIDIMENSIONALEN MODELLS AUF BASIS VON SPHÄRISCHER PHOTOGRAMMETRIE

PROCÉDÉ ET SYSTÈME DE GÉNÉRATION D'UN MODÈLE TRIDIMENSIONNEL SUR LA BASE D'UNE PHOTOGRAMMÉTRIE SPHÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.04.2023 Bulletin 2023/16**

(73) Proprietor: **Ecole Polytechnique Fédérale de Lausanne (EPFL)**
**1015 Lausanne (CH)**

(72) Inventors:
• **KAPLAN, Frédéric**
**1006 Lausanne (CH)**
• **HAMEL, Nils**
**1028 Préverenges (CH)**
• **DESCOMBES, Albane**
**1110 Morges (CH)**
• **MUDRY, Pierre-André**
**1966 Blignou (Ayent) (CH)**
• **PAPON, Charles**
**4055 Basel (CH)**

(74) Representative: **Vesterinen, Jussi Tapio**
**LUMI IP GmbH**
**Rodtmattstrasse 45**
**3014 Bern (CH)**

(56) References cited:
**CN-A- 109 509 230**

• **ZHANG XUJIE ET AL: "A UAV-based panoramic oblique photogrammetry (POP) approach using spherical projection", ISPRS JOURNAL OF PHOTOGRAMMETRY AND REMOTE SENSING, AMSTERDAM [U.A.] : ELSEVIER, AMSTERDAM, NL, vol. 159, 29 November 2019 (2019-11-29), pages 198 - 219, XP085961804, ISSN: 0924-2716, [retrieved on 20191129], DOI: 10.1016/ J.ISPRSJPRS.2019.11.016**
• **JI SHUNPING ET AL: "Panoramic SLAM from a multiple fisheye camera rig", ISPRS JOURNAL OF PHOTOGRAMMETRY AND REMOTE SENSING, AMSTERDAM [U.A.] : ELSEVIER, AMSTERDAM, NL, vol. 159, 29 November 2019 (2019-11-29), pages 169 - 183, XP085961777, ISSN: 0924-2716, [retrieved on 20191129], DOI: 10.1016/J.ISPRSJPRS.2019.11.014**
• **ALAIN PAGANI ET AL: "Structure from Motion using full spherical panoramic cameras", 2011 IEEE INTERNATIONAL CONFERENCE ON COMPUTER VISION WORKSHOPS (ICCV WORKSHOPS), IEEE, 6 November 2011 (2011-11-06), pages 375 - 382, XP032095263, ISBN: 978-1-4673-0062-9, DOI: 10.1109/ ICCVW.2011.6130266**

- GAVA CHRISTIANO COUTO ET AL: "SPHERA - A Unifying Structure from Motion Framework for Central Projection Cameras :", PROCEEDINGS OF THE 10TH INTERNATIONAL CONFERENCE ON COMPUTER VISION THEORY AND APPLICATIONS, 1 January 2015 (2015-01-01), pages 285 - 293, XP055777611, ISBN: 978-989-7580-91-8, DOI: 10.5220/0005301702850293
- J-P TARDIF ET AL: "Monocular visual odometry in urban environments using an omnidirectional camera", INTELLIGENT ROBOTS AND SYSTEMS, 2008. IROS 2008. IEEE/RSJ INTERNATIONAL CONFERENCE ON, IEEE, PISCATAWAY, NJ, USA, 22 September 2008 (2008-09-22), pages 2531 - 2538, XP032335802, ISBN: 978-1-4244-2057-5, DOI: 10.1109/IROS.2008.4651205
- HAMEL NILS: "Spherical camera design & pose estimation algorithm", 9 June 2020 (2020-06-09), XP055777456, Retrieved from the Internet <URL:https://github.com/nils-hamel/spherical-camera> [retrieved on 20210218]

**Description**

TECHNICAL FIELD

The present invention relates to a method of digitising the environment in three dimensions. More specifically, the invention relates to a method of creating a three-dimensional (3D) model of the environment based on spherical photogrammetry. The present invention also relates to an apparatus configured to carry out the method.

BACKGROUND OF THE INVENTION

Photogrammetric methods enable 3D cloud points of the environment to be produced using normal photography equipment. As the reconstruction methodology is based on identification of specific features in pairs of images, the way photographs overlap one another is of crucial importance. Series of best practices have been defined to maximise the chance of such overlapping and the possibility of computing valid chains of paired images. However, these best practices cannot guarantee that a reconstruction would be possible after a photography campaign. In practice, as photography campaigns and point-based 3D model computations are often conducted at different moments, it happens regularly that full reconstruction reveals to be impossible. This in turn means that additional photography campaigns need to be conducted to document parts of the environment where continuous chains of image pairs could not be acquired. To avoid such issues, best practices tend to recommend conducting dense photography campaigns. This approach minimises the risk of failed reconstruction at the expense of taking a maximum number of photographs or images. This results in potentially more costly and inefficient recording strategies.

To compute a global reconstruction model from a set of captured images, a connection graph of images is built based on an analysis of images. To obtain a unique global 3D model, the images in the set need to be well connected. A single rupture in the graph has the consequence that the model splits into two non-connected parts. As the number of ruptures increases, the likelihood of obtaining a final single model of the digitised scene decreases. The inability to ensure the connectivity of the images with the current state-of-the-art photogrammetric approaches is one of the main challenges of these approaches.

This scene acquisition strategy problem is even more salient in the context of continuous mass digitisation. The difficulty stems from the fact that the strategy needs to be adapted for each scene, preventing a generic strategy. Thus, as both the complexity and the size of the scene increase, the generalisation becomes even harder to manage. This is the case, for instance, with city streets that can be broad in size while containing many details that differ from one street to another. Interior scenes are other examples which can be even more challenging, as they can be made of a series of complicated rooms only linked by small doorways.

Moreover, it is even troublesome to define a full acquisition strategy for a given a priori scene. Most of the time, one must first collect a set of captured images and submit it to a processing pipeline to detect the areas requiring more details or coverage. This ends up in an iterative digitisation process for building the image data set until the connectivity and coverage targets are met. Such a process considerably limits the ability of photogrammetry to be employed on a large scale, and it limits the ability of implementing continuous digitisation of diverse and complex environments.

One of the solutions to minimise the lack of coverage and precision involves acquiring more images than needed to secure the 3D model computation process. Whilst enabling the possibility of a single digitisation campaign, this approach leads to colossal image data sets even for reasonably small scenes. Such an approach also involves irrelevant computations as fewer images would suffice for large parts of the 3D models.

Producing a high number of images to compensate the unknown acquisition strategy also comes with another disadvantage. The use of images with a narrow field of view to estimate their geometry, and subsequently, the model of the scene, leads to a mathematical constraint. The algorithms that compute the geometry of the camera rely on light rays coming from the captured objects. However, a narrow field of view limits the acquired light rays to a relatively small solid angle. This limitation may generate numerical instabilities during geometry estimation that reduce the accuracy of the model estimation or even discard an entire subset of images. This instability problem may be exacerbated if images are taken from a similar position pointing roughly in the same direction. The strategy of considering large redundant image data sets to ensure image connectivity may also aggravate the problems instead of defeating them.

Publication "A UAV-based panoramic oblique photogrammetry (POP) approach using spherical projection" by Xujie Zhang et al. proposes a UAV-based panoramic oblique photogrammetry (POP) approach to achieve georeferenced panoramic images and real 3D models together by using panorama image projection algorithms.

Publication "Panoramic SLAM from a multiple fisheye camera rig" by Shunping Ji et al. presents a feature-based simultaneous localisation and mapping (SLAM) system for panoramic image sequences obtained from a multiple fisheye camera rig in a wide baseline mobile mapping system (MMS).

CN109509230A provides a SLAM method applied to a multi-lens combination panoramic camera, which well realises the automatic positioning and map construction functions of a vehicle-mounted multi-lens combination panoramic camera, and achieves a high positioning accuracy of 0.1 m level without resorting to an expensive GPS/IMU integrated navigation system.

Publication "Structure from Motion using full spherical panoramic cameras" by Alain Pagani and Didier Stricker investigates the use of full spherical panoramic images for structure from motion (SFM) algorithms.

Publication "A unifying structure from motion framework" by P.F. McLauchlan and D.W. Murray proposes a statistical framework that enables 3D structure and motion to be computed optimally from an image sequence, on the assumption that feature measurement errors are independent and Gaussian distributed.

Publication "Monocular visual odometry in urban environments using an omnidirectional camera" by Jean-Philippe Tardif et al. presents a system for monocular simultaneous localisation and mapping (mono-SLAM) relying solely on video input. The algorithm makes it possible to precisely estimate the camera trajectory without relying on any motion model.

Publication "Spherical camera design & pose estimation algorithm" by Nils Hamel proposes the theoretical design of a spherical central camera with a specific algorithm definition for the pose estimation using images from such device.

SUMMARY OF THE INVENTION

It is an object of the present invention to overcome at least some of the problems identified above related to digitisation of environments. More specifically, one of the aims of the present invention is to provide an improved method of generating a three-dimensional model of the environment.

According to a first aspect of the invention, there is provided a method for generating a three-dimensional model of the environment as recited in claim 1.

The proposed method has the advantage that it transforms the experimental photography acquisition strategies into predicable recording photography campaigns that enable a successful production of point-based 3D models in the most efficient way possible. This is made possible for instance by designing a camera aiming to capture images with the maximum field of view, i.e. a spherical field of view, and combining it with computing and route planning system means. Such a spherical perception guarantees, at least in theory, a perception in every direction and as a consequence solves the main drawback of photogrammetry, which relates to narrow fields of view. The use of an omnidirectional camera significantly simplifies the planning of capture strategies to ensure the connectivity of the images. With a single trajectory of the camera, it is possible to obtain a full model of the entire environment without the need to plan a complicated path to ensure the coverage of all objects of the environment thereby maintaining the required connectivity at the same time. The fact that the camera perceives the entire environment compulsorily guarantees, under certain conditions, the connectivity of the images. With such a camera, it possible at least theoretically to plan a trajectory that will guarantee that no failed connections occur between two successive image captures.

According to a second aspect of the invention, there is provided a system for generating a three-dimensional model of the environment as recited in claim 15.

Other aspects of the invention are recited in the dependent claims attached hereto.

BRIEF DESCRIPTION OF THE DRAWINGS

Other features and advantages of the invention will become apparent from the following description of a non-limiting example embodiment, with reference to the appended drawings, in which:

- Figure 1 schematically illustrates an example design of a camera that may be used in the scanning system of the present invention;

- Figures 2 to 5 show example spherical images, and they further show how some notations used in the present description can be understood with reference to these spherical images;

- Figure 6 is a simplified block diagram showing some elements of a system configured to implement the teachings of the present invention;

- Figure 7 schematically illustrates another view of the camera design that may be used in the scanning system of the present invention;

- Figure 8 shows a scenario to retain points of the environment to be digitised, where the retained points correspond to matches of features of three successive images taken by the camera;

- Figure 9 shows three spherical images and how they are translated and rotated with respect to each other;

- Figure 10 is a flow chart illustrating the process of creating a 3D model of the environment to be digitised; and

- Figures 11a to 11c are a flow chart illustrating the last step of the flow chart of Figure 10 in more detail.

DETAILED DESCRIPTION OF AN EMBODIMENT OF THE INVENTION

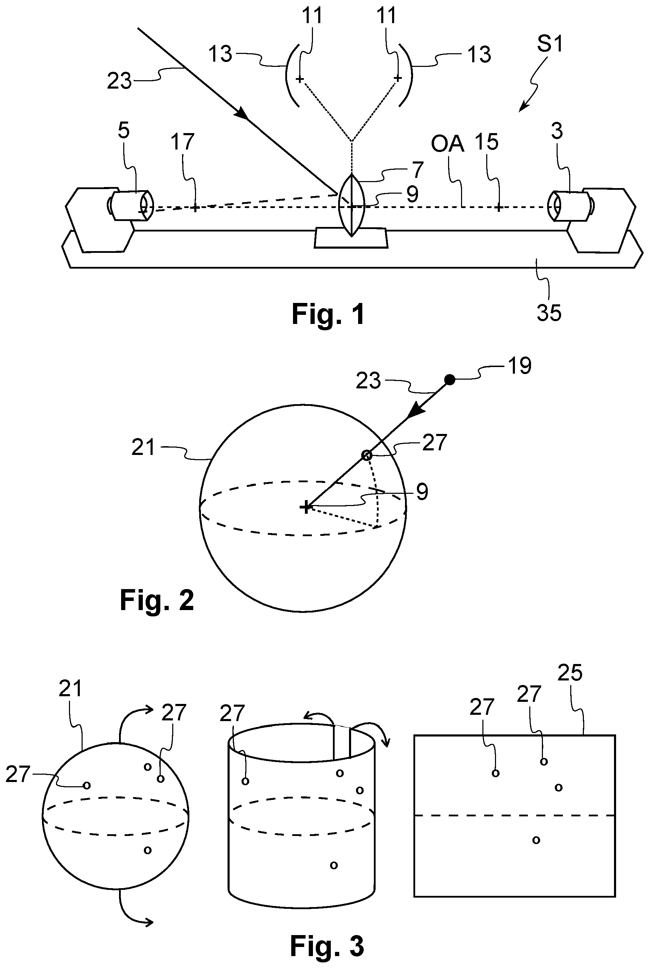

An embodiment of the present invention will now be described in detail with reference to the attached figures. Identical or corresponding functional and structural elements which appear in the different drawings are assigned the same reference numerals. It is to be noted that the use of words "first", "second" and "third", etc. may not imply any kind of particular order or hierarchy unless this is explicitly or implicitly made clear in the context. With reference to Figures 1 to 5, the following notations are used in the present description:

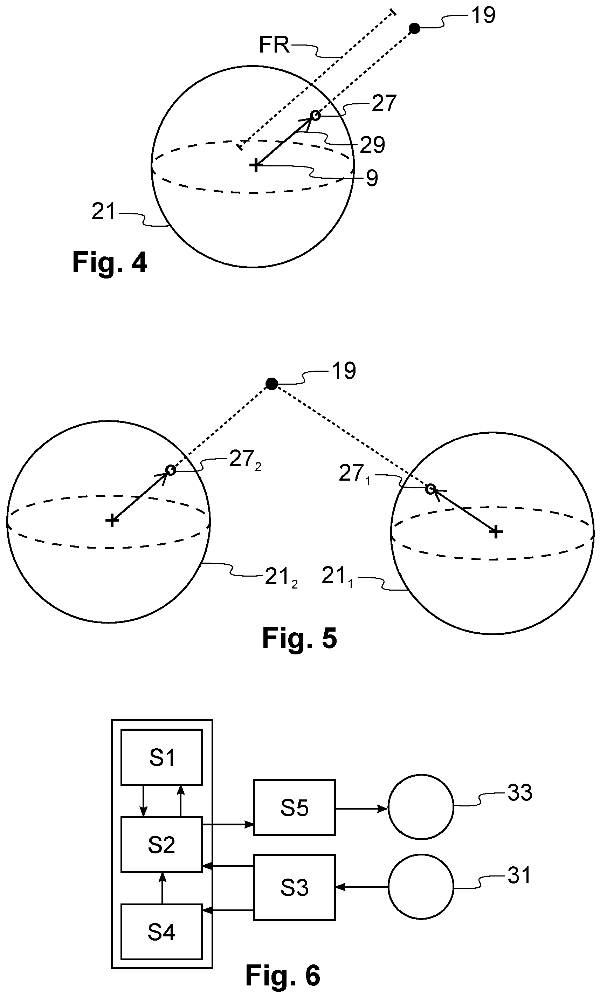

- A sensor 3, 5 is understood as one of two sub-cameras of a camera device S1, and it is used to capture a camera mirror 7. A sensor is thus configured to acquire traditional images. Two such images acquired at the same time by the two sensors 3, 5 are then used to produce a spherical image by combining them using camera calibration of the camera S1;
- A mirror 7 is the central optical element, optionally metallic element, on which light from the environment is reflected towards the two sensors 3, 5;
- A main focal point or camera centre 9 is the centre of the mirror 7. It is the point used to align a first mirror face and a second mirror face by matching on it their respective mirror face focal point 11. In the example below, the first and second mirror faces are hyperbolas 13;
- Secondary focal points 15, 17 are the two points on which the light is focused after it has bounced from the mirror 7. These two secondary focal points 15, 17 and the main focal point 9 are aligned on a line that is called an optical axis OA of the camera S1;
- A camera S1 or camera device is the assembly of two sensors 3, 5 and a mirror 7 aligned correctly along an optical axis OA;
- A 3D point 19 is a point or point-like element of a real-world scene or environment, and which is able to be seen by the camera. In other words, a 3D point is understood as a punctual element in a three-dimensional space. It is then entirely determined by three coordinates that give its position. A 3D point may be anything that belongs to the scene, and which defines a formal position in space. For example, the corner of a window or the end of a tree branch are 3D points;
- A 3D line is understood as a line in a three-dimensional space. It is then entirely determined by one 3D point and a vector in the three-dimensional space.
- A spherical image or simply an image 21 is the measure of light rays' colour of the environment around the camera travelling in the direction of the main focal point 9 when they intersect a unit sphere centred at the main focal point of the camera S1. A spherical image 21 is then the measure of light colour as if the unit sphere were a sensor collecting only light rays 23 travelling in the direction of the main focal point 9. Practically, a spherical image has to be flattened to be representable. Usually, equirectangular mappings are used to turn the sphere of a spherical image on which light is measured into a flat image 25 or representation as shown in Figure 3;
- Calibration is an action or process of calibrating something. In the examples below, the calibration involves actions required to correctly turn the images of the two sensors 3, 5 into a spherical image 21;
- A feature 27 is the representation of a 3D point on a spherical image 21. A feature is most of the time a group or set of pixels identifying the 3D point of an object;
- A feature direction is the direction of a feature 27 defined by a (unit) vector 29 defined by the centre 9 of the spherical image (which is also the centre of the mirror or the main focal point) and the position of the feature on the sphere of the spherical image 21 such that the feature direction points away from the centre of the spherical image as illustrated in Figure 4;
- A radius of a feature or feature radius FR is the needed amount of direction (distance) of this feature to reach the 3D point 19 from the centre of the spherical image 9 as shown in Figure 4;
- Matched features may be understood as two features $27_1$, $27_2$ of two different spherical images $21_1$, $21_2$ if the 3D point 19 they represent is identical or substantially identical as shown in Figure 5. In this case, the two features may be considered as matched;
- A triplet may be understood as a group of three images that are linked together by a group of matched features. The term triplet can then refer to the images of the group or to the geometry computed based on the images;
- For a triplet of images A, B and C and for a triplet of images B, C and D, the triplets' (unique) common rotation and (unique) common translation are the ones that appear between images B and C;
- An optimal intersection of matched features is understood to be the best possible intersection of 3D lines (lines in 3D space) that are defined by the feature directions or their virtual extensions. The 3D point in Figure 5 thus represents an example of an optimal intersection point. An optimal intersection is equivalent to the estimated position of the 3D point represented by the features in their respective spherical image;

- A 3D model is a collection of graphical primitives used to reflect real world structures on a computer. A point-based 3D model is simply a 3D model only using points as graphical primitives;
- Geometry is referring to all or a set of elements produced during the computation of a point-based 3D model, i.e. the 3D points themselves, the estimated translation vectors and rotation matrices that link the camera main focal points (as it advances along its trajectory) and the position of the camera main focal points themselves;
- A sparse 3D model or geometry is used to refer to 3D models and geometries containing a low number of primitives to represent real world structures. On the other hand, a dense 3D model or geometry is used to refer to 3D models and geometries that contain much more primitives to represent the real-world structures; and
- $k$ is used as a generic index for different purposes.

The block diagram of Figure 6 illustrates some functional elements of the proposed 3D scanning system 1 that may be useful for understanding the teachings of the present invention. A camera S1, which in this example is an omnidirectional camera, is provided for taking images or photographs of the surroundings. The omnidirectional camera S1 may be understood as a "spherical" camera in the sense that it is configured to generate a full view or a substantially full view of the surroundings while keeping a centrality property at the same time. The centrality property of the camera ensures that incoming light rays (e.g. all incoming light rays) are focused on a single point, making it a single panoramic focusing device. A perfect spherical camera may be impossible to build in practice but can be approximated in various ways. The camera comprises a central mirror having two sides made with a single piece of reflective material in the present example. The shape of the mirror is chosen to be hyperbolic to take advantage of the possibility to make their focal points match. However, the presented design is merely one of possible design possibilities but not the only one possible for the invention. A theoretical design of the camera is described later in more detail.

The scanning system 1 also comprises a computing and storage system S2 for storing the images taken by the camera S1 and for controlling the operation of S1. More specifically, the computing and storage system S2 captures and stores images on command. A trajectory planning system S3 is provided for planning an optimal trajectory and optionally image capturing strategy while taking into account the camera type and/or features of the camera S1. The problem can be modelled as a trajectory on a connected graph. The goal for the trajectory planning system S3 is to allow the camera S1 to pass any given location only once within a closed loop, and to trigger the computing and storage system S2 at the right moment, which in turn triggers the camera S1. The trajectory planning system S3 takes as input a vectorised map 31 of the environment or surroundings to be digitised. A directed graph corresponding to the paths that need to be covered by the camera S1 is modelled on the map. A directed graph is understood to be a graph that is made up of a set of vertices connected by edges, where the edges have a direction associated with them. The steps of the planification of the trajectory are thus the following: a map of the street network of the environment of interest, such as a city, is schematised into a directional graph with labelled vertices whose coordinates are stored. An algorithm takes as input a list of the connections of the graph and gives as output a list of ordered geographical coordinates to follow. These coordinates can be given to any mapping service, such as a web mapping service, to orientate the driver of the moving system S4. A street network of a city can be seen as a directed graph, whose edges are streets and vertices are crossroads and roundabouts. The output of the trajectory planning system S3 is a route or trajectory (which is computed based on the directed graph), which is thus automatically planned, in order to optimally cover the environment to be digitised or scanned.

Various alternatives for the trajectory planning system exist that may be used in the present invention. A solution can be adapted from the Chinese postman problem (CPP), also known as a route inspection problem, which involves finding the shortest path that explores all the arcs of a graph exactly once. Variations of the CPP also exist. A special case of the CPP is a mixed Chinese postman problem (MCPP), in which the underlying graph consists of both directed and undirected edges. However, the problem is NP-complete. A solution is proposed by R. Martí et al., "A GRASP heuristic for the mixed Chinese postman problem". In: European Journal of Operational Research 142.1 (2002), pp. 70-80, ISSN: 0377-2217. However, for the specific purpose of planning a trajectory for digitisation, the condition of forming a closed path is added. The ideal trajectory to follow is closed and visits each arc once in order to capture an optimal number of images, to have a complete coverage of the place of interest while not producing redundant information. The problem of finding a closed trajectory which visits once each arc and ends at the starting point is solved by Hierholzer's algorithm whose practical solution is implemented in V. Rafanavicius et al., "Efficient Path Planning Methods for UAVs Inspecting Power Lines", In: 2017 International Conference on Platform Technology and Service (PlatCon), 2017, pp. 1-6, and applied to an embedded system. It provides a good solution in linear time to the present route planning problem. Some necessary conditions to apply a formal Hierholzer algorithm are not always respected by a graph extracted from a street network, but such conditions may be overridden by adding simple custom heuristics. Eventually the proposed solution may not be optimal but adequate and solvable promptly in case of setback.

The scanning system 1 also comprises a moving system or vehicle S4, which may be autonomous or human controlled. The moving system S4 supports the camera S1. The moving system is in this example a car, and the camera S1 may be fixed on top of the car. The moving system S4 is in this example guided by the computing and storage system S2 using speed measurements. The moving system may thus be an autonomous vehicle that strictly follows the theoretical trajectory produced by the trajectory planning system S3 in order to guarantee an optimal acquisition strategy. Alternatively, the movement can be controlled by a human operator following the instructions of the trajectory planning system S3 system while having the computing and storage system S2 activated. The moving system S4 is equipped with a speed measurement system that determines an adapted or fine-tuned triggering strategy for the computing and storage system S2 in order to guarantee the possibility of a full reconstruction. Thus, image triggering time instants depend on the speed of the camera S1. The moving system S4 may also be equipped with a positioning and tracking system in order to assess the difference between the ideal position planned by the trajectory and planning system S3 and its actual position.

There is further provided a processing system or unit S5, which is configured to produce the point-based 3D model 33 from the images stored in the computing and storage system S2 (taken along the trajectory produced by the trajectory planning system S3), taking into account their spherical nature in the computation. The processing unit S5 may also be extended to other kinds of processing units for producing various types of 3D representations (dense cloud points, meshes, etc.). The overall system 1 permits the digitisation of any real-world environment to be planned and executed, and a point-based 3D model or 3D cloud points to be produced so that the generated model can be theoretically guaranteed to be complete.

The design of the camera S1 is next explained in more detail. As explained above, in this example a spherical omnidirectional central camera is used. A theoretical design and a practical implementation are both given as examples. The proposed design is in line with catadioptric devices and extends it to obtain a fully spherical field of view, keeping the centrality of the device at the same time. The ideal design is first proposed, followed by an explanation of a physical implementation that matches the ideal design.

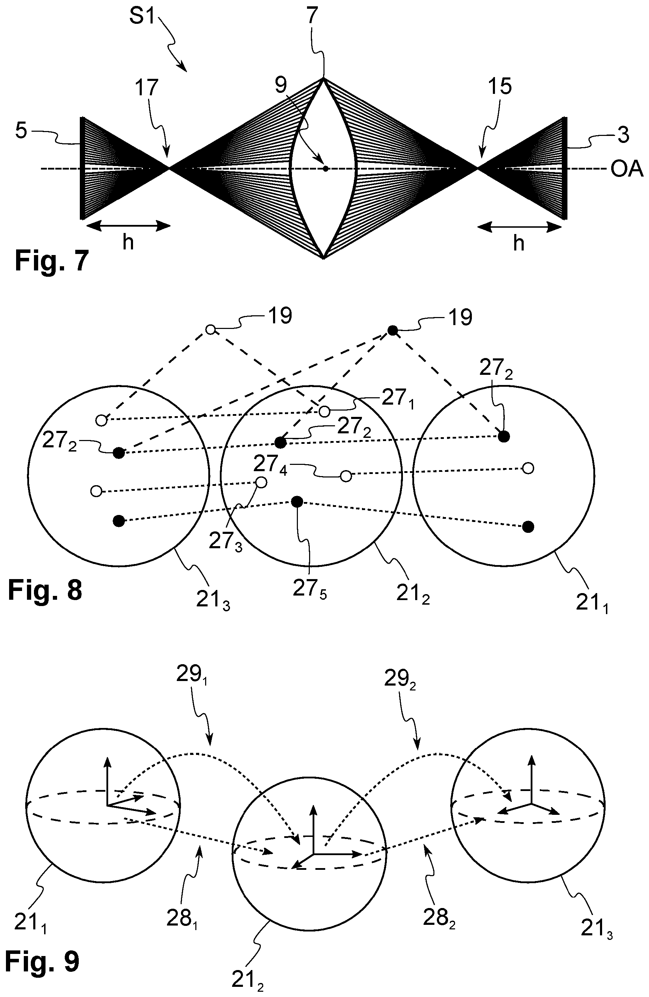

The proposed design as shown in Figures 1 and 7 addresses the challenge of generating a full view of the surroundings and keeping the centrality property at the same time. The proposed theoretical design of the camera uses a central mirror 7 with two, opposing sides made of a single piece of reflective material. The shape of the mirror is chosen to be hyperbolic to take advantage of the possibility to make its focal points match. The canonical parametric equations for the hyperbolas 13 are the following:

$$\begin{cases} x = \pm\, a\, \cosh(t) \\ y = b\, sinh(t) \end{cases} \quad t \in \mathbb{R}, \tag{1}$$

where $a$ and $b$ are the hyperbolas' orthogonal parameters. By using the property of hyperbolas, one obtains the following relationships:

$$a = \frac{c}{e} \qquad b = c\sqrt{(1 - e^{-2})}, \tag{2}$$

where e is the eccentricity of the hyperbola and c the distance between a secondary focal point, 15, 17 and the origin 9 of the mirror 7.

The shape of the mirror is obtained by superposing and displacing one hyperbola towards the other one until their respective focal points meet along the line defined by the mirror's main focal point. The resulting inner surface confined by the two hyperbolas 13 defines the subsection of the mirror. Making the two focal points 11 of the hyperbolas 13 coincide at the same position, i.e. at the centre of the mirror 7, ensures the centrality of the overall device. Figures 1 and 7 depict the theoretical design of the camera S1 including the mirror 7.

Based on the canonical equations of hyperbolas 13, the following formulae describe the subsection of the mirror:

$$\begin{cases} x_{\pm} = \mp\, a\, \cosh(t) \pm c \\ y = b\, sinh(t) \end{cases} \quad t \in \left[-cosh^{-1}\left(\frac{c}{a}\right), +cosh^{-1}\left(\frac{c}{a}\right)\right]. \tag{3}$$

The positive equation corresponds to the right surface of the mirror, while the negative equation describes the left one (as seen in Figures 1 and 7). The shape of the mirror can also be described more conveniently through a function of the optical axis OA as follows:

$$h_{\pm}(x) = \pm b\, sinh\left(cosh^{-1}\left(\frac{x}{a}\right)\right) \quad x \in\; ]-\infty, -a] \cup [+a, +\infty[. \tag{4}$$

Then, the shape of the mirror is obtained as a solid made of the revolution around the optical axis OA of the

following function:

$$m(x) = \begin{cases} \{h_+(x+c) \text{ if } x \in [a-c, 0] \\ \{h_-(x-c) \text{ if } x \in [0, c-a] \end{cases} \tag{5}$$

By applying the previous equations, it is possible to derive the physical properties of the mirror. The diameter of the mirror 7 can be computed using the formula:

$$D = 2b\sqrt{\left(\frac{c}{a}\right)^2 - 1} = 2c\sqrt{(1 - e^{-2})(e^2 - 1)}. \tag{6}$$

The mirror thickness along the optical axis of the camera S1 can be expressed as follows:

$$T = 2(c - a) = 2c(1 - e^{-1}). \tag{7}$$

It is to be noted that the mirror is entirely described by its two parameters c and e.

As shown in Figures 1 and 7, a first image sensor 3 is placed on a first side of the mirror 7 to capture the light focalised on a first secondary focal point 15 by the first side of the mirror, and a second image sensor 5 is placed on a second, opposite side of the mirror 7 to capture the light focalised on a second secondary focal point 17 by the second side of the mirror. The two sensors 3, 5 are positioned along the optical axis OA of the camera S1 so that the first sensor 3 is fixed at a distance $h$ of the first secondary focal point 15, while the second sensor 3 is fixed at a distance $h$ of the second secondary focal point 17. In this example, the mirror is placed halfway between the first and second sensors 3, 5. The main focal point 9 of the camera S1 is located at the centre of the mirror 7.

$$h = \frac{2cda}{b^2} = \frac{2d}{e(1 - e^{-2})}. \tag{8}$$

In the above equation, $d$ is the radial size of the sensors 3, 5. These sensors can be placed at a distance of $h$ from the respective secondary focal point along the optical axis OA. Placing them as far as possible from the mirror would lead to smaller blind spots in camera images and would thus be the preferred choice.

The presented camera S1 is capable of scanning the entire surrounding with single image captures as the mirror collects all the light from the environment and sends it to the sensors 3, 5 while preserving the centrality of the entire camera at the same time. This kind of camera solves the main drawback of photogrammetry, namely a narrow field of view. The connectivity between the images is naturally guaranteed as it is almost impossible to have elements disappearing within two spherical image captures considering a reasonable translation of the camera between two successive captures.

The use of the proposed camera S1 significantly simplifies the definition of a capture strategy to ensure the connectivity of the images. With a single motion of the camera along the trajectory, it is possible to obtain a full model of the entire surroundings without the need to plan a complex path to ensure the coverage of all the objects of the scene and maintaining the required connectivity at the same time. For the case of modelling a city street, it is possible to obtain a full 3D model of the buildings with a single pass of the trajectory. The fact that the camera perceives the entire surrounding compulsorily guarantees the connectivity of the images and makes it practically impossible to have a failed connection between two successive captures. This statement also applies to the digitisation of interiors. Theoretically, two camera captures would suffice, to obtain a full 3D model of the entire room, whereas, with a standard camera, one would need hundreds of rectilinear images. It is to be noted that a camera capture is in this context understood to mean a combination of a first sensor capture and a second sensor capture resulting in a spherical image. In practice, to obtain a well-detailed 3D model, more than two camera captures per point may be used to better take use of the triangulation techniques. Nonetheless, the acquisition strategy can be kept simple. The connectivity between the images is guaranteed as each one of the images perceives almost all the elements of the scene.

Another advantage of the proposed camera S1 is that it enables the design of numerically better-constrained algorithms. As the matched features between two spherical images are distributed around the camera main focal point 9, the geometry estimation would operate on a well-distributed set of matched features as opposed to those obtained with a conventional camera where they end up concentrated within a small solid angle. The spread of the matched features allows the formulation of a more stable computation of the geometry that results in a more robust estimation, improving both the quality of the estimation and the connectivity between the images. This property also enables considering image captures with relatively small displacement as a more homogeneous distribution of the features compensates the effect of lacking precision due to a relatively small translation of the camera S1.

The simplicity of the spherical geometry allows a more straightforward mathematical formulation of the geometry estimation. The representation of the environment on this theoretical camera results in a simple projection on a sphere of the points of the scene as described in the following formula:

$$\boldsymbol{p}' = S(\boldsymbol{p}) = \frac{R^T(\boldsymbol{p}-\boldsymbol{t})}{\|\boldsymbol{p}-\boldsymbol{t}\|}. \tag{9}$$

In the above equation, $\boldsymbol{p}$ is a 3D point of the scene and $\boldsymbol{p}'$ its projection on the respective spherical image (i.e. its feature). $\boldsymbol{R}$ is the rotation of the camera and $\boldsymbol{t}$ its position with respect to the 3D model frame. It is to be noted that the intrinsic parameter of the camera is not required. This simplification dramatically reduces the complexity of estimating the geometry of an image set.

The main challenge of building such a camera is the construction in low quantity and at a reasonable cost of the dual-sided hyperbolic mirror 7 that fits between the two sensors 3, 5. A high precision of its shape is required to ensure the centrality of the camera S1, while a high surface quality is required to avoid scattering and to benefit from the two high-resolution sensors 3, 5. One manufacturing process which satisfies those requirements is to apply diamond turning on a raw metallic cylinder by using a specialised lathe. The resulting mirror quality is high enough to not require any polishing. One or more additional coatings may be then applied to the mirror surface to obtain a durable surface.

The sensors 3, 5 have two specific requirements associated with the scope of the application. Their exposure time should be low enough to avoid motion blur and they need to be able to focus on the whole hyperbolic mirror 7. The exposure time depends on the luminosity and the speed of the camera, so that the faster the camera moves and the higher the luminosity, the smaller can the exposure time be. The second requirement can be met by setting the optics of the sensors 3, 5 to have a significant depth-of-field, which can be done by lessening the optic aperture. However, as it reduces the incoming light, it also increases the required minimal exposure time. Consequently, the sensor sensitivity and the optic aperture are two characteristics that preferably need to be considered in the settings. Additionally, as the camera S1 is omnidirectional, the sun is likely to be present in the field of view. Consequently, the sensors should be able to be exposed to the sun without damages nor have significant artefacts. Furthermore, the two sensors 3, 5 are advantageously configured to be triggered simultaneously to capture hemispherical images. The mirror 7 and the two sensors are fixed to a support 35, which extends between the two sensors. The support is a robust element to ensure correct optical adjustment of the sensors with respect to the mirror and to reduce vibrations between these three elements.

A calibration procedure is advantageously used to compensate for the imperfections of the physical omnidirectional camera S1. In this example, a two-phase calibration process is used. In the first phase, a customised omnidirectional calibration toolbox is used to estimate the optical parameters of each camera hemisphere obtained by each one of the sensors. In other words, during the first phase, camera distortions are determined and corrected. In the second phase, the two sensors 3, 5 are rotationally aligned along the optical axis OA. This can be done by making sure that an object (which may be a simple straight) which is visible in both hemispherical images is continuous in both of these images. A reprojection of the spherical image into a rectilinear image at the junction between the two sensor images was used to adjust the difference and ensure the continuity of the object.

The camera S1 can be mounted on top of the moving system S4, i.e. in this example the car, in such a way that the two sensors 3, 5 are aligned with the direction of travel. Lens hoods may be used to reduce parasitic light from outside of the mirror. The camera S1, the computing and storage system S2 and the moving system S4 are in this example powered by the moving system's battery and/or by an uninterruptible power supply (UPS). It is to be noted that in this example, these three systems form a common mobile system, while the trajectory planning system S3 and the processing unit S5 are physically separated from the mobile system. The mobile system is in this example arranged to communicate with the trajectory planning system S3 and the processing unit S5 via a wireless communication link. The moving system S4 may also be equipped with a standard off-the-shelf camera system, for example facing forwards, to produce a rectilinear image data set for comparison.

The processing unit S5 is next explained in more detail. The processing unit is used to carry out the required computations to obtain 3D models 33. The processing steps of geometry estimation, and the computation of dense geometries are presented in the following in more detail.

In the present example, the feature extraction and matching algorithms of the processing unit use the OpenCV implementation of AKAZE features disclosed e.g. by Alcantarilla et al., "Fast Explicit Diffusion for Accelerated Features in Nonlinear Scale Spaces", In: Proceedings of the British Machine Vision Conference 2013 (Sept. 2013). Furthermore, in this example a modified-local difference binary (M-LDB) descriptor is used as proposed by Alcantarilla et al. The 3-channel full size descriptors are used with a given detector response threshold, which in this specific example is set to 0.00025. The maximum octave evolution of the image and the default number of sub-levels per scale level may be set to a default value, such as 4. For the diffusivity type, the parameter DIFF PM G2 may be used. First, a brute force matching of the features is performed, and then the inliners are selected, for instance by using the grid-based motion statistics for fast, ultra-robust feature correspondence (GMS) according to JiaWang Bian et al., "GMS: Grid-based Motion Statistics for Fast, Ultra-robust Feature Correspondence", In: IEEE Conference on Computer Vision and Pattern Recognition, 2017. As images are matched pairwise and taking into account that the computation of the geometry of a triplet as explained later expects matches between a group of three images, a procedure is developed to select feature matches that appear between a first image $21_1$ and a second image $21_2$, and also between the second image $21_2$ and a third image $21_3$ of a group of three images as shown in Figure 8. The features of the second image $21_2$ are used to determine if they are both used in a match between the first image $21_1$ and the second image $21_2$, and between the second image $21_2$ two and the third image $21_3$. This allows only matches that are continuous from the first image to the third image of the considered group to be considered. In the example of Figure 8, only the point 19 (the point with black fill in Figure 8) corresponding to features $27_2$ and $27_5$ is retained for the computation of the 3D model, while the points corresponding to features $27_1$, $27_3$ and $27_4$ are not retained. The feature correspondences that are present in the three images are here called triplets of matched features. This concept can be generalized to n-tuples.

The geometry estimation algorithm of the 3D model 33 is explained next in more detail. As mentioned above, the spherical approach of the camera and its centrality property enables the simplification of the computation and the optimisation of the geometry estimation. This simplification results from the fact that the considered true omnidirectional, and central camera requires no intrinsic parameters. The geometry estimation is then based only on simple and robust estimation of the extrinsic parameters, which define the location and orientation of the camera with respect to a fixed coordinate system. As introduced by Equation 9, the images generated by the proposed camera S1 can be interpreted as projections on a unit sphere 21. The proposed algorithm is based on an iterative estimation of the geometry of the images where the most computationally complex part only requires singular value decomposition (SVD) and inversion of $3 \times 3$ matrices.

The geometry estimation problem of the 3D model 33 is next explained in more detail. A point of the scene $p \in \mathbb{R}^3$ is projected onto a unit sphere 21 by the camera S1 and can uniquely be defined by the angles $\phi$ and $\theta$ with respect to the centre of the camera 9. The features detected on the camera images are then considered as elements of $\mathbb{R}^3$ after application of the mapping $S$ of Equation 9. In other words, the features are interpreted as unit vectors whose origin is the centre of the camera and point at the locations of the features on the unit sphere. Thus, feature directions can be defined in this manner.

Consider two image captures taken by cameras placed at positions $t_1$ and $t_2$, with rotations $R_1$ and $R_2$ in the scene frame, a subset of points $P_k \in \mathbb{R}^3$ is defined as:

$$P_k = \left\{ \boldsymbol{p}' \in \mathbb{R}^3 : \boldsymbol{p}' = S_k(\boldsymbol{p}), \boldsymbol{p} \in M_{(1,2)} \right\}, \tag{10}$$

where $S_k$ is the projector of the sensor $k$ and $M_{(1,2)}$ is a subset of the 3D points that are perceived by the two sensors and that are assumed to be matched pairwise.

Consider a point $p$ and its two corresponding projections $\boldsymbol{p}'_1 \in P_1, \boldsymbol{p}'_2 \in P_2$, then the following relation holds:

$$r_1 \boldsymbol{R}_1 \boldsymbol{p}'_1 - r_2 \boldsymbol{R}_2 \boldsymbol{p}'_2 + \boldsymbol{t}_1 - \boldsymbol{t}_2 = 0, \tag{11}$$

where

$$r_1 = \|\boldsymbol{p}_1 - \boldsymbol{t}_1\|, r_2 = \|\boldsymbol{p}_2 - \boldsymbol{t}_2\|. \tag{12}$$

The geometry estimation of the two camera images can then be formulated as finding the rotation matrix $R_{(1,2)}$ and the translation vector $t_{(1,2)}$ such that:

$$r_1 \boldsymbol{R}_{(1,2)} \boldsymbol{p}' + \boldsymbol{t}_{(1,2)} - r_2 \boldsymbol{p}'_2 = 0 \ \ \forall \boldsymbol{p} \in M_{(1,2)} \tag{13}$$

expressed in the second sensor frame. The following relations naturally hold:

$$R_{(1,2)} = R_2^T R_1 \ \ R_{(2,1)} = R_1^T R_2 \ \ t_{(1,2)} = R_2^T(t_1 - t_2) \ \ t_{(2,1)} = R_1^T(t_2 - t_1). \tag{14}$$

The geometry estimation is then summarised as determining the relative rotation and translation vector between the two sensors 3, 5.

Pairwise geometry estimation solver is next explained in more detail. The problem of estimating the geometry, i.e., to find the rotation matrix $R_{(1,2)}$ and translation vector $t_{(1,2)}$, translates into minimising Equation 13. For this purpose, an iterative approach based on the successive estimation of the radii $r_i$, defined in Equation 11, is proposed.

Consider two camera spherical images, the set of the 3D points $M_{(1,2)}$ observed by both sensors 3, 5 and assumed to satisfy Equation 11, and their respective projections $P_1$ and $P_2$ onto the spherical images, the algorithm starts with two sets of unit vectors whose origins coincide with the camera centre 9 or the camera main focal point (see Equation 9 defining how points are projected according to the camera centre). The values of the radii $r_i$ are unknown at first, as the projection discards their depth information retaining only their projection directions. The values of the following radii are then updated iteratively:

$$r_{1,i}^k \text{ (first sensor) and } r_{2,i}^k \text{ (second sensor).} \qquad (15)$$

In the above equation, $i$ denotes the index of the 3D point in the set $M_{(1,2)}$ and $k$ the iteration number of the algorithm. For the first iteration, the following values are used:

$$r_{1,i}^1 = 1, r_{2,i}^1 = 1 \quad \forall i = 1, ..., \left| M_{(1,2)} \right| \quad R_{(1,2)} = I_{3 \times 3} \quad t_{(1,2)} = 0 \qquad (16)$$

Using the directions provided by the respective projections $p'_{1,i}$ and $p'_{2,i}$ for each sensor 3, 5, a position for each point is calculated using their respective radii in the first iteration. The positions obtained in this way are then expressed with respect to the frame of each sensor and are all placed on their respective unit sphere as all the radii are initially set to value one:

$$p_{c,i}^1 = 0 + r_{c,i}^1 p'_{c,i} \quad \forall c = 1, 2 \quad \forall i = 1, ..., \left| M_{(1,2)} \right| \qquad (17)$$

The product $r_{c,i}^1 p'_{c,i}$ gives the estimation of the position of the 3D point $i$ according to the frame of sensor $c$ at the end of the first iteration. Each sensor then produces a set of estimations of the positions of the 3D points according to their frame. A first estimation of the rotation matrix $R_{(1,2)}$ is in this example computed using the point set registration algorithm proposed by Arun et al., "Least-squares fitting of two 3-D point sets", In: IEEE Transactions on pattern analysis and machine intelligence 5 (1987), pp. 698-700. The correlation matrix that is used is defined as:

$$H^k = \sum_i (p_{1,i}^k - c_1) \otimes (p_{2,i}^k - c_2), \qquad (18)$$

where k is the iteration number and $c_1$ and $c_2$ denote the centroids of the estimated point position for each of the two sensors 3, 5. By applying an SVD to the correlation matrix, it is possible to compute the estimation of the $R_{(1,2)}$ rotation matrix at iteration $k$ as follows:

$$R_{(1,2)}^k = V^k (U^k)^t \text{ with } H^k = U^k \sum\nolimits^k (V^k)^t. \qquad (19)$$

The estimation of the translation vector $t_{(1,2)}$ can be derived from Equation 13 using the point set centroids as follows:

$$t_{(1,2)}^k = c_2 - R_{(1,2)}^k c_1. \qquad (20)$$

Using the estimation of the rotation matrix $R_{(1,2)}$ and the translation vector $t_{(1,2)}$ obtained in each iteration, it is possible to calculate a correction of the radii $r_{c,i}^{k+1}$ by computing the optimal intersection, corresponding to each 3D point of the scene, between the $\mathbb{R}^3$ lines defined by their projection on each sensor. The computations of the optimal intersections can be carried out by expressing each direction and sensor centre with respect to a common frame. This change of reference can be accomplished by using the estimated rotation matrix and the translation vector and using Equation 13.

The computation of the optimal intersection of the lines along their feature directions is in this example performed using the solution proposed Johannes Traa, "Least-squares Intersection of Lines", UIUC, 2013 that can be applied regardless of the number of directions to be considered. Let $W_c$ be defined as follows:

$$W_c = I_{3\times3} - p'_{c,i} \otimes p'_{c,i}. \tag{21}$$

Then, the optimal intersection can be determined as follows:

$$q_i = (\textstyle\sum_c W_c)^{-1}(\textstyle\sum_c W_c C_c), \tag{22}$$

where c can take the values c = 1, 2 and $C_C$ is the position of the centre of the sensor expressed in the common frame of the two sensors 3, 5. The radii associated with the considered points are updated for each sensor by orthogonally projecting the obtained optimal intersection towards the $\mathbb{R}^3$ lines defined by the projections of each of the two points to the centres of their respective sensor.

At iteration k +1, the positions of the estimated points (Equation 17) get closer to the associated common 3D point in the real world. By continuing this iterative approach, the originally projected 3D points on the spheres get progressively expanded outwards from the centre of the sensor until they reach their correct position in space. As the iteration progresses, the rotation matrix $R^k_{(1,2)}$ and the translation vector $t^k_{(1,2)}$ get closer to their correct values.

Different stop conditions can be used to terminate the iterative process. In the proposed approach, for each iteration k, the largest minimal distance $e^k$ between the optimal intersections of the estimated points and the $\mathbb{R}^3$ lines defined by their projections, is calculated. When the quantity

$$e^{(k,k+1)} = \left| e^k - e^{k+1} \right| \tag{23}$$

results in a value, which is below a defined value, the iteration is stopped and the rotation matrix $R^{k+1}_{(1,2)}$ and the translation vector $t^{k+1}_{(1,2)}$ are retained as the image pair extrinsic calibration parameters.

A solver that estimates the geometry of a pair of images was proposed above. In the following, a generalisation that can operate on any number of images n that have a common set of matches $M_{(1,...,n)}$ between these images is presented. The pairwise sub-sets can be extracted from the set of matches $M_{(1,...n)}$ so that:

$$M_{(1,2)} \subset M_{(1,...n)} \quad \ldots \quad M_{(n-1,n)} \subset M_{(1,...n)} \tag{24}$$

Each pairwise rotation and translation can be computed using the relation of Equation 19.

$$R^k_{(1,2)}, t^k_{(1,2)} \quad \ldots \quad R^k_{(n-1,n)}, t^k_{(n-1,n)} \tag{25}$$

These estimated rotations and translations are then used to express all the feature directions with respect to a common global frame that is usually chosen as the first sensor frame. With this configuration, the optimal intersection (as defined in Equation 22) is used to estimate the position of each 3D point at a given iteration. The optimal intersection is calculated using n different directions emanating from the n sensor centres. The radii $r^{k+1}_{c,i}$ are then updated in the same way as for the pairwise case. Similar stop criteria as used for the pairwise case can be employed for this generalised solver by calculating the greatest minimal distance from each feature for all of the n camera poses (i.e. the spherical images) to the respective optimal intersection.

The solver stability is discussed next in more detail. In applications with real images, the feature matching procedure generates numerous errors that correspond to different positions of the scene but are wrongly matched together. As explained earlier, the feature matching procedure is understood to be the procedure of searching for corresponding features at least in two different (spherical) images. To prevent the solver from becoming unstable, dynamic filtering of the matches is introduced. These filtering methods prevent the solver from causing numerical instabilities that occur when the radii $r^k_{c,i}$ rise towards infinity or contract to take negative values. A first dynamic filter introduced to the solver is a range boundary condition check applied to the values of the radii $r^k_{c,i}$. It is reminded that there is one radius per feature and per image. The filtering condition consists of comparing the radius values with the norm of the largest distance vector appearing between two image centres. If the following inequality is satisfied, the match is kept in the set $M_{(1,...,n)}$:

$$\gamma_{min}|\boldsymbol{t}_{max}| < r_{1,i}^k < \gamma_{max}|\boldsymbol{t}_{max}|. \tag{26}$$

Otherwise, the match is dropped from the set and is no longer considered in the subsequent iterations of the solver. The $\gamma_{min}$ and $\gamma_{max}$ are used to adjust the filter tolerance. This dynamic filtering process eliminates false matches preventing the algorithm from collapsing with a bad estimation.

A second dynamic filter, which is used in addition to the first filter, involves a statistical analysis of the minimal distance that remains between the optimal intersection point (as defined in Equation 22) and the corresponding estimated positions of the 3D points according to each sensor 3, 5. The consistency of a 3D point position can then be monitored by these $n$ minimum distances $d_{c,i}^k$ that result in zero values in the case of a perfect geometry estimation. For a sensor $c$, the mean $\mu_c^k$ and standard deviation $\sigma_c^k$ of the distances $d_{c,i}^k$ are computed at iteration $k$. Then, the following condition is verified:

$$\left|d_{c,i}^k - \mu_c^k\right| < \gamma \sigma_c^k \quad \forall c = 1, ..., n. \tag{27}$$

If the condition is satisfied for a match $i$ on the sensor $c$, the match is kept. In other words, a match $i$ is retained if the condition is fulfilled for each sensor $c$. The value $\gamma$ sets the strictness of the filtering. These two dynamical filtering processes enable the algorithm to keep its stability throughout the iterations and to handle the incorrectly matched scene points properly. The exclusion of bad matches allows more robust and accurate estimation of the rotation and translation.

As the number of common feature matches cannot be sustained as the number of successive images increases, an incremental approach is implemented to validate the design and calibration of the camera S1 as well as the geometry estimation solver on a long camera path. The strategy is based on estimating the geometry by triplets of images. The existence of sets of common feature matches is fairly guaranteed as long as the distance between the image takes is kept reasonable. The following sets of common feature matches are considered assuming a set of $n$ successive images:

$$M_{(1,2,3)}, M_{(2,3,4),...,M_{(n-2,n-1,n)}}. \tag{28}$$

The computation of the geometry of each triplet generates the estimation of two relative rotation matrices and two translation vectors. With such an approach, two successive triplets have one relative rotation matrix and one translation vector in common. The successive triplets can then easily be aggregated by applying the common rotation, translation, and adjusting the scale factor. The result of this process is a common and global model, which constitutes the visual odometry of the camera image sequence. The current approach is used solely to demonstrate the validity of the camera design, calibration, and the results of the geometry estimation solver and may produce considerable drift as the number of images n increases. Optimisation between the triplets can further be done as only the geometry of the triplets itself is currently optimised.

The proposed geometry estimation algorithm and the incremental approach require robust feature matches to estimate the geometry of a set of camera captures. As a consequence, the number of matches is relatively small. This generates a sparse 3D model of the digitised structure. In the field of digitisation, denser 3D models are usually desired. In the following, a densification procedure on spherical images, similar to the approach from Matthieu Garrigues and Antoine Manzanera, "Video++, a modern image and video processing C++ framework", In: Design and Architectures for Signal and Image Processing (DASIP), 2014 Conference on, IEEE. 2014, pp. 1-6, is adopted. Although the procedure is computationally the most expensive part of the processing unit S5, the approach used is simple and produces an accurate representation of the digitised environment.

The procedure takes as input a set of successive camera captures (i.e. spherical images) together with their estimated geometry, i.e. the position and orientation of each camera capture in the 3D space, where the 3D model 33 is to be constructed. Similarly to the geometry estimation algorithm, the densification step processes the images by groups of three. A dense geometry for each triplet is computed and the estimated sparse geometry is used to merge them into a single dense 3D model. Within an image triplet, two displacement maps are computed using pyramidal optical flow from Ce Liu et al., "Beyond pixels: exploring new representations and applications for motion analysis", PhD thesis, Massachusetts Institute of Technology, 2009. From the displacement maps, two sets of densely matched features are created taking the central image as a common reference to relate the features of the first and last images of the triplet.

The two sets of dense matches between the two first and two last images of the triplet are then used to compute the dense geometry of the triplet. The relative rotation matrices and translation vectors generated for each pair of images by the sparse geometry estimation are used to express the directions of the dense set of matches in a common frame which is usually chosen to be the frame of one of the images of the triplet. The optimal intersection equation, namely Equation 22, is then used to compute the position of the dense points 19 in the common frame. It follows that each 3D point 19 of the dense representation is computed with the optimised intersection of three directions. However, relying solely on the optical flows to compute the dense representation is typically not adequate. Indeed, optical flow matches any common parts of the panoramic images, introducing undesired elements in the dense set of matches, for example, the sky. It is therefore necessary to filter the computed dense geometry in order to remove inconsistent features and their related 3D points. As the geometry is known, a similar approach to the dynamic filtering process according to Equation 27 may be applied, however, with a stricter applied parameter.

To filter out undesired 3D points 19, the consistency of each 3D point position is analysed. Since any point of the dense geometry is placed in the 3D space using three of its views, it is possible to check the differences between the optimal point position calculated with Equation 22 and the position according to the direction of its features 27 on each camera capture. The three positions of the considered dense 3D point are computed based on its feature directions in the 3D space and compared to the optimal intersection. The considered dense 3D point is considered consistent, in other words coherent with the real world, when the four compared points remain within the same location in space.

Consider $e_1, e_2, e_3 \geq 0$ as the distances between the three positions of the point based on the optical flow and the optimal position given by Equation 22. Then, the following filtering condition is examined:

$$(e_1 < \gamma) \qquad \wedge \qquad (e_2 < \gamma) \qquad \wedge \qquad (e_3 < \gamma), \qquad (29)$$

where $\gamma$ is the filtering tolerance value. If the previous condition is fulfilled, the 3D point of the dense geometry is kept. The value of $\gamma$ is chosen according to the amount of the translation between the images of the considered triplet scaled by a factor $\delta$.

$$\gamma = \frac{1}{\delta}\left(\left\|t_{(1,2)} + t_{(2,3)}\right\|\right) \qquad (30)$$

The 3D point colours of the dense geometry are selected using the pixel colours of the central image of the triplet.

In the following, a method is presented to detect still motion with two spherical images. The presented geometry estimation algorithm may become numerically unstable when applied to estimate the rotation and translation between two relatively close poses. This situation may happen for example at the beginning and at the end of the capture sequence, when the vehicle stops due to a traffic light or when other vehicles get in the way at the crossings. The proposed method estimates the motion between two consecutive images and discards images that do not correspond to a minimal displacement.

The method considers the features extracted from each image of a pair of images and computes the Euclidean distance in the spherical representation of the matched features. It is to be noted that it is not convenient to use pixel-wise distances calculated in the equirectangular image plane because one feature appearing on one lateral side can appear on the other side in the next image. This phenomenon is seen, for example, when the camera S1 is moving forward, and an object appears in the field of view of the front sensor in the first image capture, and then for the second image capture, the same object appears in the field of view of the rear sensor due to the movement of the vehicle. The calculation involves computing the mean value and the standard deviation of the distances of the matched features in the spherical coordinate system. The method compares the value of the product between the mean and the standard variation against a predefined threshold. If it is smaller than this threshold, the method detects that the vehicle is in still motion. In such a case, the image that arrived second is discarded and it is not propagated in the processing unit S5. However, it is to be noted that there are many ways to detect still motion, and the above multiplication (mean multiplied by standard deviation) is only one of them.

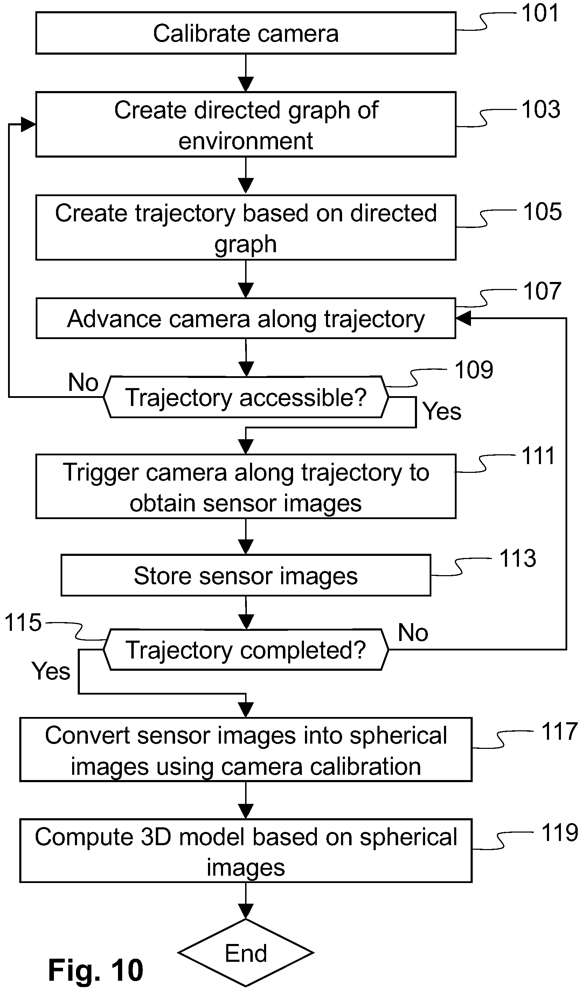

The flow chart of Figure 10 summarises the above-described process of scanning the environment and generating a 3D model 33 of the environment based on the 3D scanning. In step 101, the camera is calibrated. In this example, the calibration is a two-step process. More specifically, in a first step, the distortions of the sensors 3, 5 are modelled and/or corrected. For instance, an image from a sensor is distorted if a straight object appears curved in the image. In a second step, the two sensors 3, 5 are aligned. It is to be noted that these calibration steps may be carried out substantially simultaneously or one of them may be carried out before the other. Furthermore, no calibration procedure is typically needed before each digitisation campaign, but only if at least one of the sensors has been manipulated, by for example adjusting its optics. In step 103, a directed graph of the environment or scene is created. This step is carried out by the trajectory planning system S3, which takes as input a vectorised map 31 including directions of the environment. The output of this step is thus a directed graph whose nodes are located at each road or street intersection and arcs are directed according to the accessibility of the roads and/streets. The directions of the arcs model one-way streets and traffic regulations. The map should ideally only include the roads and/streets of interest for the digitisation. In step 105, a trajectory for the moving system S4 is generated based on the directed graph obtained in step 103. This step is also carried out by the trajectory planning system S3. The trajectory comprises an ordered list of nodes to be followed by the moving system S4.

In step 107, the moving system S4 together with the camera starts advancing along the trajectory. In step 109, it is determined whether or not the trajectory is accessible. If it is determined that the trajectory is not accessible, due to road works for instance and/or due to other restrictions, then the process continues in step 103, where a new graph is created. If on the other hand, it is determined that the trajectory at the current location is still accessible, then the process continues in step 111, where the camera S1 is triggered to acquire two sensor images, i.e. one image per sensor. In this example, the images are captured so that any two consecutive images have a constant or substantially constant spatial distance between them. This distance is computed based on speed measurement information from a speed measurement unit included in the moving system S4 or elsewhere in the mobile system. This means that image captures are triggered automatically while the camera S1 advances along the trajectory. In step 113, the captured images are stored by the computing and storage system S2. In step 115, it is determined whether or not the trajectory has been completed. If it is determined that the trajectory has not been completed, then the process continues in step 107, where the moving system is again advanced unless the movement is prevented by traffic lights and/or traffic conditions. If in step 115 it was determined that the trajectory has been completed, then in step 117, the processing unit S5 converts the hemispherical sensor images into spherical images 21 by using information from the camera calibration. The images are selectively combined so that any two hemispherical images taken at the same, or substantially at the same time instant are combined. The calibration gives information on how to move the pixels from each sensor image to the final spherical image. In this step, the spherical images are also flattened, i.e. in this example equirectangular images are created. The flattened images are then used in the subsequent processing of the spherical images. In step 119, the processing unit S5 generates a 3D model 33 of the environment by using the spherical images 21.

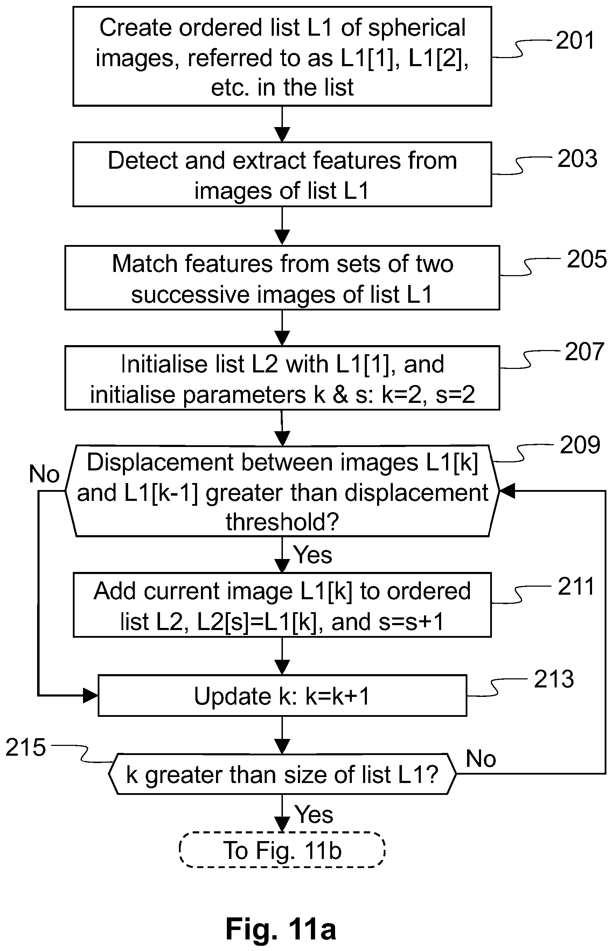

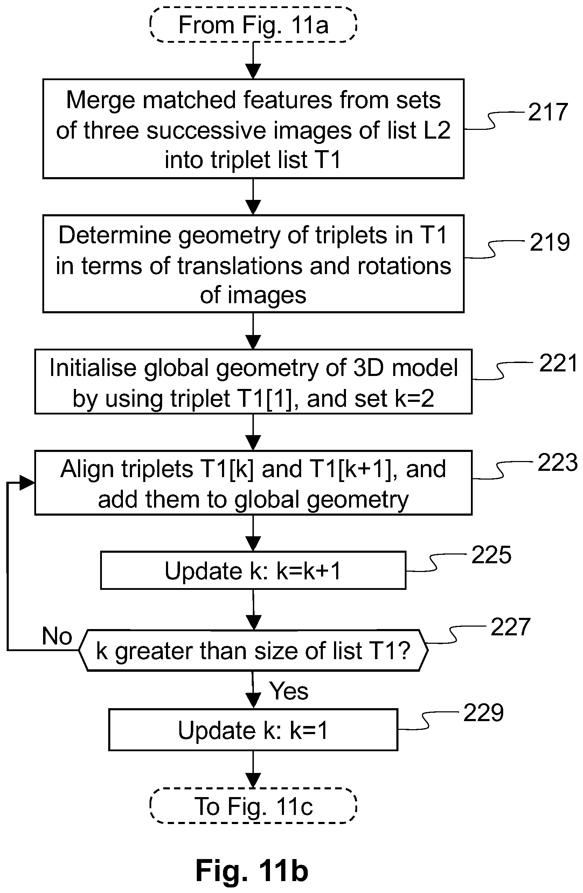

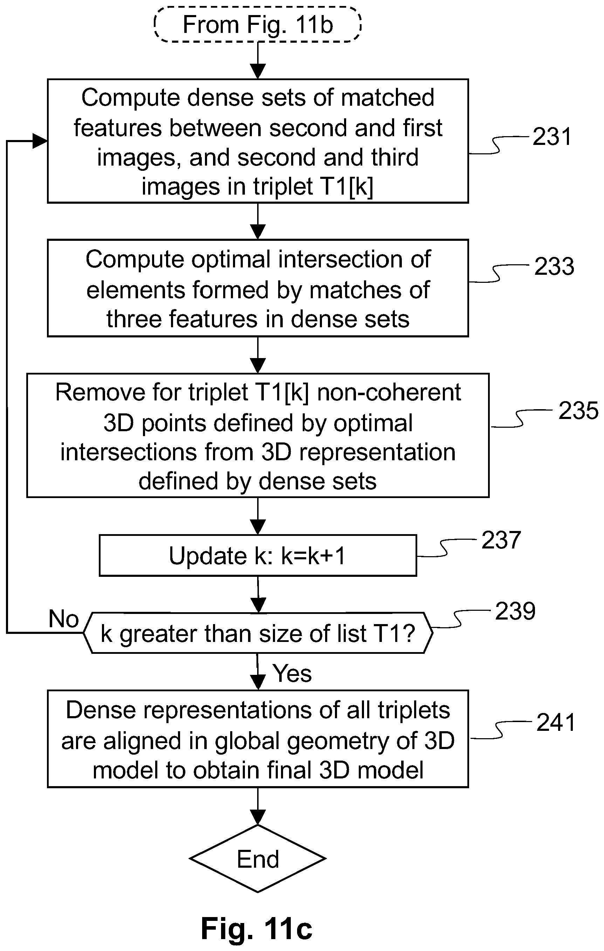

The process of step 119 of the flow chart of Figure 10 is next explained in more detail with reference to the flow chart of Figures 11a to 11c. In step 201, an ordered list L1, or a first list, of the spherical images 21 is generated. In this example, the spherical images are provided in the form of equirectangular images. The list keeps the chronological order of the spherical image capture. For this purpose, each image in the list L1 is advantageously indexed. Thus, in this example, L1[1] designates the first spherical image on the list, L1[2] the second spherical image, etc. In step 203, features 27 are detected and extracted from the spherical images 21, in this example from all the images on the list L1. In step 205, features 27 of two successive spherical images 21 are matched. Thus, the features of L1[k] and L1[k+1] are matched for all possible values of k. In step 207, indices or parameters k and s are initialised so that k=2 and s=2. Also, in this step, a second list L2 is initialised so that in this example, the first item L2[1] on the second list is set to L1[1]. Alternatively, any other spherical image from the first list L1 could be added to the second list L2.

Next in steps 209 to 213, the spherical images 21 having too small spatial displacement with respect to their respective preceding spherical image are removed from further processing. For this purpose, the second list L2 is complemented with spherical images having a sufficient spatial displacement with respect to their preceding spherical image. It is to be noted that a given minimum displacement between two consecutive images is preferred in order to reduce the risk of unstable processing of the geometry. More specifically, in step 209, the feature matches between images L1[k] and L1[k-1] are analysed and compared to a displacement threshold. In this example, it is determined whether or not the mean value multiplied by the standard deviation of the angles defined by feature directions of matched features is above a threshold value. If the displacement is high enough, then in step 211, the current spherical image of the first list L1 is added to the second list L2: L2[s] =L1[k], and then the parameter s is updated: s=s+1. Then in step 213, the parameter k is updated: k=k+1. If in step 209 it was determined that the images are too close, then the current image is not added to the second list L2 and the process continues in step 213. In this manner it can be ensured that duplicate images, taken for instance when the camera is not moving, are removed from further processing. In step 215, it is determined whether or not the value of k is greater than the size of the first list L1. If the value of k is smaller than the list size, then the process continues in step 209. If on the other hand, all the images of the first list L1 have been considered, then the process continues in step 217.

In step 217, the feature matches of all groups of three successive spherical images of the second list L2 are combined or merged. More specifically, for a group of three successive spherical images of the second list L2, only the matches that appear between the first and second image, and between the second and third images are kept. These matches are kept in a triplet list T1. The items, also referred to as triplets, of the triplet list are thus defined as follows: T1[1] = matches of L2[1], L2[2] and L2[3], T1[2] = matches of L2[2], L2[3] and L2[4], etc. In step 219, the geometry of the triplets in T1 in terms of translations and rotations of the images 21 is determined. More specifically, the estimation of the two rotations and two translations that describes the geometry of each triplet is made. Thus, with reference to Figure 9, a first rotation $28_1$ and a first translation $29_1$ are determined between the first and second images $21_1$, $21_2$ of a given triplet, and a second rotation $29_2$ and a second translation $28_2$ are determined between the second and third images $21_2$, $21_3$ of the same triplet. Thus, this step involves computing the positions of the 3D points 19 in the environment based on the feature matches, and computing 219 a respective rotation $29_1$, $29_2$ and translation $28_1$, $28_2$ of the spherical images 21 with respect to one another within the respective group of three spherical images 21, where the rotations and translations describe the geometry of the respective group of three spherical images 21. This operation is repeated for all the triplets on the triplet list T1. The geometry solver as explained above may be used on each triplet of the triplet list T1 to compute the rotations and translations.

Next in steps 221 to 225, the triplets are merged into a single global geometry of the 3D model using their shared translation and rotation. More specifically, in step 221, the triplet T1[1] is used to initialise the global geometry, and this triplet is then kept unchanged for the rest of the processing. However, it is to be noted that any other triplet could be used instead for the initialisation. Also, in this step, k is updated, namely k is set to 2. In step 223, the triplet T1[k] is aligned with the triplet T1[k-1] using their shared rotation and translation and added to the global geometry. The shared rotation and translation between these two triplets are the ones between the second and third images of the triplet T1[k-1], which are thus the same rotation and translation values, respectively, as the ones between the first and second images of the images of the triplet T1[k]. In step 225, the parameter k is updated so that k=k+1. In step 227, it is determined whether or not the value of k is greater than the size of the triplet list T1. If the value of k is smaller than the list size, then the process continues in step 223. If on the other hand, all the images of the triplet list T1 have been considered, then the process continues in step 229, where the value of k is updated, namely the value of k is set to 1. Now, a sparse representation of the 3D model has been obtained.

Next, in steps 231 to 239, a dense representation of each triplet of the triplet list T1 is computed using their respective known geometry. When computing the dense representation, the aim is to match as many pixels or image or picture elements of the images as possible. It is to be noted in the sparse representation, only a sparse set of features were matched. In other words, the sparse representation comprises fewer matched features than the dense representation. The geometries were computed in step 219. In step 231, a dense set of matched features between the first image and the second image, and another dense set of matched features between the second image and the third image of the triplet T1[k] are computed using an optical flow algorithm as defined e.g. by Ce Liu et al., "Beyond pixels: exploring new representations and applications for motion analysis", PhD thesis, Massachusetts Institute of Technology, 2009. In step 233, by using the known geometry of the triplet T1[k], the optimal intersection of each element of the dense set of matched features is computed, where an element is understood to be a match of three features from three different images. In step 235, the optimal intersections computed for the triplet T1[k] are analysed to determine if the optimal intersections are coherent enough with the actual scene to be modelled. If they are not coherent enough, then the 3D points the optimal intersection define are removed from the dense representation.

In step 237, the parameter k is updated so that k=k+1. In step 239, it is determined whether or not the value of k is greater than the size of the triplet list T1. If the value of k is smaller than the list size, then the process continues in step 231. If on the other hand, all the images of the triplet list T1 have been considered, then the process continues in step 241, where the dense representations of all the triplets of the triplet list T1 are aligned in the global geometry of the 3D model as computed in steps 221 to 227 to obtain a final dense 3D model. More specifically, the matched features of the dense representations of all the triplets are aligned in this step. After this step the process comes to an end.

The present invention is relevant to any operators that need to digitise the environment in 3D. This is especially important for digitisation of cities and urban environments and interiors. For these cases, the invention makes it possible to plan precisely and in an optimal way the trajectory of a scanning vehicle. The invention thus permits predicting the effort and time necessary for the photography acquisition and to evaluate costs precisely on the basis of the size and complexity of the environment to scan. The invention is especially relevant when working in the context in which efficiency of the digitisation is a major issue: for example mapping interventions during disasters or crises, such as earthquakes, flood, fires, conflict zones, or working zones in which mapping must be carried out as fast as possible, etc.

While the invention has been illustrated and described in detail in the drawings and foregoing description, such illustration and description are to be considered illustrative or exemplary and not restrictive, the invention being not limited to the disclosed embodiment. For example, the camera may comprise more than two image sensors, e.g. three or four image sensors that are configured to capture images to form spherical images. In this case the number of reflective surfaces of the mirror would advantageously equal the number of the image sensors.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

**Claims**

1. A computer-implemented method of creating a three-dimensional model (33) of the environment, the method comprising:

• planning (105) a trajectory for a moving system (S4) carrying an omnidirectional camera (S1) comprising at least a first image sensor (3) facing in a first direction for capturing first images, and a second image sensor (5) facing in a second, different direction for capturing second images;

• advancing (107) the moving system (S4) along the trajectory;

• triggering (111) the omnidirectional camera (S1) at given time instants depending on the speed of the moving system (S4) along the trajectory to capture first and second images;

• obtaining (117) spherical images (21) by selectively combining the first and second images;

• filtering out (209, 211) spherical images (21) whose capturing location displacement with respect to their respective previous and/or following spherical image capturing location along the trajectory is smaller than a displacement threshold; and

• creating (119) the three-dimensional model (33) from the spherical images (21),

**characterised in that** the capturing location displacement is obtained by determining a mean value multiplied by a standard deviation of angles between matched feature directions between the spherical images (21) under consideration, wherein two features ($27_1$, $27_2$) of two different spherical images ($21_1$, $21_2$) are matched if points (19) in the environment they represent coincide with each other, and wherein a feature direction is the direction of a feature (27) defined by a vector (29) defined by a centre (9) of the spherical image (21) and the position of the feature on the spherical image (21) such that the feature direction points away from the centre (9) of the spherical image (21).

2. The method according to claim 1, wherein the method further comprises obtaining (217, 219, 221, 223) a sparse representation of the three-dimensional model prior to obtaining the three-dimensional model (33).

3. The method according to any one of the preceding claims, wherein the method further comprises detecting feature matches between features (27) in groups of three successive spherical images (21), wherein two features ($27_1$, $27_2$) of two different spherical images ($21_1$, $21_2$) are matched if points (19) in the environment they represent coincide with each other, and using the feature matches and the points they define for the creation of the three-dimensional model (33) from a respective group of three spherical images (21) only if a respective feature match appears between a first image ($21_1$) and a second image ($21_2$), and also between the second image ($21_2$) and a third image ($21_3$) of the respective group of three spherical images.

4. The method according to claim 3, wherein the method further comprises computing (219) the positions of the points (19) in the environment based on the feature matches, and computing (219) a respective rotation ($29_1$, $29_2$) and translation ($28_1$, $28_2$) of the spherical images (21) with respect to one another within the respective group of three spherical images (21), the rotations and translations describing the geometry of the respective group of three spherical images (21).

5. The method according to claim 4, wherein the method further comprises merging (221, 223, 225, 227, 229) the geometries of the groups of three spherical images (21) based on their common rotation ($29_1$, $29_2$) and translation ($28_1$, $28_2$).

6. The method according to any one of claims 3 to 5, wherein the method further comprises comparing (235) point positions defined by the feature matches between first and second images ($21_1$, $21_2$) and feature matches between second and third images ($21_2$, $21_3$) to remove point positions which do not define sufficiently similar points.

7. The method according to any one of the preceding claims, wherein prior to computing the three-dimensional model (33), the method comprises transferring the first and second images to a processing unit (S5) configured to compute the three-dimensional model (33).

8. The method according to any one of the preceding claims, wherein the method further comprises determining the speed of the moving system (S4) along the trajectory, and/or wherein the trajectory is a closed loop, and/or wherein the three-dimensional model (33) is computed once the trajectory has been completed by the moving system (S4).

9. The method according to any one of the preceding claims, wherein the omnidirectional camera (S4) is triggered at constant distance intervals along the trajectory, and/or wherein the method further comprises calibrating (101) the omnidirectional camera (S1).

10. The method according to claim 9, wherein the calibration comprises modelling the distortion of the first and/or second image sensors (3, 5) and/or aligning the first and second sensors (3, 5) with respect to a camera mirror (7) placed between the camera sensors.

11. The method according to any one of the preceding claims, wherein the method further comprises storing (113) the first and second images prior to obtaining the spherical images (21).

12. The method according to any one of the preceding claims, wherein the omnidirectional camera (S1) comprises a mirror (7) between the first and second image sensors (3, 5), and wherein the mirror comprises a first reflective surface facing the first image sensor (3), and a second reflective surface facing the second image sensor (5), and/or wherein the omnidirectional camera (S1) comprises a mirror (7) having its main focal point at the centre of the mirror (7).

13. The method according to claim 12, wherein at least one of the first and second reflective surfaces is a hyperbola.

14. The method according to any one of the preceding claims, wherein the first direction is opposite to the second direction.

15. A system (1) for creating a three-dimensional model (33) of the environment, the system comprising:

 • an omnidirectional camera (S1) comprising a first image sensor (3) facing in a first direction for capturing first images, and a second image sensor (5) facing in a second, different direction for capturing second images;
 • a moving system (S4) carrying the omnidirectional camera (S1);
 • a trajectory planning system (S3) for planning a trajectory for the moving system (S4);
 • a computing system (S2) for triggering the omnidirectional camera (S1) at given time instants depending on the speed of the moving system (S4) along the trajectory to capture first and second images; and
 • a processing unit (S5) for obtaining spherical images (21) by selectively combining the first and second images, and for creating the three-dimensional model (33) from the spherical images (21), wherein the processing unit (S5) is configured to filter out (209, 211) spherical images (21) whose capturing location displacement with respect to their respective previous and/or following spherical image capturing location along the trajectory is smaller than a displacement threshold,

**characterised in that** the capturing location displacement is obtainable by determining a mean value multiplied by a standard deviation of angles between matched feature directions between the spherical images (21) under consideration, wherein two features ($27_1$, $27_2$) of two different spherical images ($21_1$, $21_2$) are matched if points (19) in the environment they represent coincide with each other, and wherein a feature direction is the direction of a feature (27) defined by a vector (29) defined by a centre (9) of the spherical image (21) and the position of the feature on the spherical image (21) such that the feature direction points away from the centre (9) of the spherical image (21).

## Patentansprüche

1. Ein computerimplementiertes Verfahren zum Erstellen eines dreidimensionalen Modells (33) der Umgebung, wobei das Verfahren Folgendes umfasst:

 • Planen (105) einer Trajektorie für ein bewegliches System (S4), das eine omnidirektionale Kamera (S1) trägt, die mindestens einen ersten Bildsensor (3), der in eine erste Richtung zeigt, um erste Bilder aufzunehmen, und einen zweiten Bildsensor (5), der in eine zweite, andere Richtung zeigt, um zweite Bilder aufzunehmen, umfasst;
 • Vorwärtsbewegen (107) des beweglichen Systems (S4) entlang der Trajektorie;
 • Auslösen (111) der omnidirektionalen Kamera (S1) zu gegebenen Zeitpunkten in Abhängigkeit von der Geschwindigkeit des beweglichen Systems (S4) entlang der Trajektorie, um erste und zweite Bilder aufzunehmen;
 • Erhalten (117) sphärischer Bilder (21) durch selektives Kombinieren der ersten und zweiten Bilder;
 • Herausfiltern (209, 211) von sphärischen Bildern (21), deren Aufnahmeortverschiebung in Bezug auf ihren jeweiligen vorherigen und/oder nachfolgenden Aufnahmeort des sphärischen Bildes entlang der Trajektorie kleiner als ein Verschiebungsschwellenwert ist; und
 • Erstellen (119) des dreidimensionalen Modells (33) aus den sphärischen Bildern (21),

**dadurch gekennzeichnet, dass** die Aufnahmeortverschiebung durch Bestimmen eines Mittelwerts multipliziert mit einer Standardabweichung von Winkeln zwischen übereinstimmenden Merkmalsrichtungen zwischen den betrachteten sphärischen Bildern (21) ermittelt wird, wobei zwei Merkmale ($27_1$, $27_2$) zweier verschiedener sphärischer Bilder

($21_1$, $21_2$) übereinstimmen, wenn Punkte (19) in der Umgebung, die sie darstellen, miteinander übereinstimmen, und wobei eine Merkmalsrichtung die Richtung eines Merkmals (27) ist, das durch einen Vektor (29) definiert ist, der durch einen Mittelpunkt (9) des sphärischen Bildes (21) und die Position des Merkmals auf dem sphärischen Bild (21) definiert ist, sodass die Merkmalsrichtung vom Mittelpunkt (9) des sphärischen Bildes (21) weg zeigt.

2. Das Verfahren gemäß Anspruch 1, wobei das Verfahren ferner das Erhalten (217, 219, 221, 223) einer spärlichen Darstellung des dreidimensionalen Modells vor dem Erstellen des dreidimensionalen Modells (33) umfasst.

3. Das Verfahren gemäß einem der vorhergehenden Ansprüche, wobei das Verfahren ferner das Erkennen von Merkmalsübereinstimmungen zwischen Merkmalen (27) in Gruppen von drei aufeinanderfolgenden sphärischen Bildern (21) umfasst, wobei zwei Merkmale ($27_1$, $27_2$) zweier verschiedener sphärischer Bilder ($21_1$, $21_2$) übereinstimmen, wenn Punkte (19) in der Umgebung, die sie darstellen, miteinander übereinstimmen, und das Verwenden der Merkmalsübereinstimmungen und der Punkte umfasst, die sie definieren, für die Erstellung des dreidimensionalen Modells (33) aus einer jeweiligen Gruppe von drei sphärischen Bildern (21) nur dann, wenn eine jeweilige Merkmalsübereinstimmung zwischen einem ersten Bild ($21_1$) und einem zweiten Bild ($21_2$) sowie auch zwischen dem zweiten Bild ($21_2$) und einem dritten Bild ($21_2$) der jeweiligen Gruppe von drei sphärischen Bildern auftritt.

4. Das Verfahren gemäß Anspruch 3, wobei das Verfahren ferner das Berechnen (219) der Positionen der Punkte (19) in der Umgebung basierend auf den Merkmalsübereinstimmungen und das Berechnen (219) einer jeweiligen Rotation ($29_1$, $29_2$) und Translation ($28_1$, $28_2$) der sphärischen Bilder (21) in Bezug zueinander innerhalb der jeweiligen Gruppe von drei sphärischen Bildern (21 ) umfasst, wobei die Rotationen und Translationen die Geometrie der jeweiligen Gruppe von drei sphärischen Bildern (21) beschreiben.

5. Das Verfahren gemäß Anspruch 4, wobei das Verfahren ferner das Zusammenführen (221, 223, 225, 227, 229) der Geometrien der Gruppen von drei sphärischen Bildern (21) basierend auf ihrer gemeinsamen Rotation ($29_1$, $29_2$) und Translation ($28_1$, $28_2$) umfasst.

6. Das Verfahren gemäß einem der Ansprüche 3 bis 5, wobei das Verfahren ferner das Vergleichen (235) von Punktpositionen umfasst, die durch die Merkmalsübereinstimmungen zwischen dem ersten und dem zweiten Bild ($21_1$, $21_2$) und Merkmalsübereinstimmungen zwischen dem zweiten und dem dritten Bild ($21_2$, $21_3$) definiert sind, um Punktpositionen zu entfernen, die keine ausreichend ähnlichen Punkte definieren.

7. Das Verfahren gemäß einem der vorhergehenden Ansprüche, wobei vor der Berechnung des dreidimensionalen Modells (33) das Verfahren das Übertragen der ersten und der zweiten Bilder an eine Verarbeitungseinheit (S5) umfasst, die zum Berechnen des dreidimensionalen Modells (33) konfiguriert ist.

8. Das Verfahren gemäß einem der vorhergehenden Ansprüche, wobei das Verfahren ferner das Bestimmen der Geschwindigkeit des beweglichen Systems (S4) entlang der Trajektorie umfasst, und/oder wobei die Trajektorie eine geschlossene Schleife ist, und/oder wobei das dreidimensionale Modell (33) berechnet wird, nachdem die Trajektorie des beweglichen Systems abgeschlossen wurde (S4).

9. Das Verfahren gemäß einem der vorhergehenden Ansprüche, wobei die omnidirektionale Kamera (S4) in konstanten Abstandsintervallen entlang der Trajektorie ausgelöst wird, und/oder wobei das Verfahren ferner das Kalibrieren (101) der omnidirektionalen Kamera (S1) umfasst.

10. Das Verfahren gemäß Anspruch 9, wobei die Kalibrierung das Modellieren der Verzerrung des ersten und/oder zweiten Bildsensors (3, 5) und/oder das Ausrichten des ersten und zweiten Sensors (3, 5) in Bezug auf einen zwischen den Bildsensoren platzierten Kameraspiegel (7) umfasst.

11. Das Verfahren gemäß einem der vorhergehenden Ansprüche, wobei das Verfahren ferner das Speichern (113) der ersten und der zweiten Bilder vor dem Erhalten der sphärischen Bilder (21) umfasst.

12. Das Verfahren gemäß einem der vorhergehenden Ansprüche, wobei die omnidirektionale Kamera (S1) einen Spiegel (7) zwischen dem ersten und dem zweiten Bildsensor (3, 5) umfasst und wobei der Spiegel eine erste reflektierende Oberfläche, die dem ersten Bildsensor (3) zugewandt ist, und eine zweite reflektierende Oberfläche, die dem zweiten Bildsensor (5) zugewandt ist, umfasst, und/oder wobei die omnidirektionale Kamera (S1) einen Spiegel (7) umfasst, dessen Hauptbrennpunkt sich in der Mitte des Spiegels (7) befindet.

**13.** Das Verfahren gemäß Anspruch 12, wobei mindestens eine der ersten und zweiten reflektierenden Oberflächen eine Hyperbel ist.

**14.** Das Verfahren gemäß einem der vorhergehenden Ansprüche, wobei die erste Richtung der zweiten Richtung entgegengesetzt ist.

**15.** Ein System (1) zum Erstellen eines dreidimensionalen Modells (33) der Umgebung, wobei das System Folgendes umfasst:

• eine omnidirektionale Kamera (S1), die einen ersten Bildsensor (3) umfasst, der in eine erste Richtung zeigt, um erste Bilder aufzunehmen, und einen zweiten Bildsensor (5), der in eine zweite, andere Richtung zeigt, um zweite Bilder aufzunehmen;
• ein bewegliches System (S4), das die omnidirektionale Kamera (S1) trägt;
• ein Trajektorienplanungssystem (S3) zum Planen einer Trajektorie für das bewegliche System (S4);
• ein Computersystem (S2) zum Auslösen der omnidirektionalen Kamera (S1) zu bestimmten Zeitpunkten, abhängig von der Geschwindigkeit des beweglichen Systems (S4) entlang der Trajektorie, um erste und zweite Bilder aufzunehmen; und
• eine Verarbeitungseinheit (S5) zum Erhalten sphärischer Bilder (21) durch selektives Kombinieren der ersten und zweiten Bilder und zum Erstellen des dreidimensionalen Modells (33) aus den sphärischen Bildern (21), wobei die Verarbeitungseinheit (S5) so konfiguriert ist, dass sie sphärische Bilder (21) herausfiltert (209, 211), deren Aufnahmeortverschiebung in Bezug auf ihren jeweiligen vorherigen und/oder nachfolgenden Aufnahmeort des sphärischen Bildes entlang der Trajektorie kleiner als ein Verschiebungsschwellenwert ist,

**dadurch gekennzeichnet, dass** die Aufnahmeortverschiebung durch Bestimmen eines Mittelwerts multipliziert mit einer Standardabweichung von Winkeln zwischen übereinstimmenden Merkmalsrichtungen zwischen den betrachteten sphärischen Bildern (21) ermittelt werden kann, wobei zwei Merkmale ($27_1$, $27_2$) zweier verschiedener sphärischer Bilder ($21_1$, $21_2$) übereinstimmen, wenn Punkte (19) in der Umgebung, die sie darstellen, miteinander übereinstimmen, und wobei eine Merkmalsrichtung die Richtung eines Merkmals (27) ist, das durch einen Vektor (29) definiert ist, der durch einen Mittelpunkt (9) des sphärischen Bildes (21) und die Position des Merkmals auf dem sphärischen Bild (21) definiert ist, sodass die Merkmalsrichtung vom Mittelpunkt (9) des sphärischen Bildes (21) weg zeigt.

**Revendications**

**1.** Un procédé mis en œuvre par ordinateur pour créer un modèle tridimensionnel (33) de l'environnement, le procédé comprenant :

• la planification (105) d'une trajectoire pour un système mobile (S4) portant une caméra omnidirectionnelle (S1) comprenant au moins un premier capteur d'image (3) orienté dans une première direction pour capturer des premières images, et un deuxième capteur d'image (5) orienté dans une deuxième direction différente pour capturer des deuxièmes images ;
• l'avancement (107) du système mobile (S4) le long de la trajectoire ;
• le déclenchement (111) de la caméra omnidirectionnelle (S1) à des instants donnés en fonction de la vitesse du système mobile (S4) le long de la trajectoire pour capturer des premières et deuxièmes images ;
• l'obtention (117) des images sphériques (21) en combinant sélectivement les premières et deuxièmes images ;
• le filtrage (209, 211) des images sphériques (21) dont le déplacement de l'emplacement de capture par rapport à leur emplacement de capture d'image sphérique précédent et/ou suivant respectif le long de la trajectoire est inférieur à un seuil de déplacement ; et
• la création (119) du modèle tridimensionnel (33) à partir des images sphériques (21),

**caractérisé en ce que** le déplacement de l'emplacement de capture est obtenu en déterminant une valeur moyenne multipliée par un écart type des angles entre des directions des caractéristiques appariées entre les images sphériques (21) considérées, dans lequel deux caractéristiques ($27_1$, $27_2$) de deux images sphériques différentes ($21_1$, $21_2$) sont appariées si les points (19) de l'environnement qu'elles représentent coïncident entre eux, et dans laquelle une direction de caractéristique est la direction d'une caractéristique (27) définie par un vecteur (29) défini par un centre (9) de l'image sphérique (21) et la position de la caractéristique sur l'image sphérique (21) de telle sorte que la direction de caractéristique pointe à l'opposé du centre (9) de l'image sphérique (21).

2. Le procédé selon la revendication 1, dans lequel le procédé comprend en outre l'obtention (217, 219, 221, 223) d'une représentation clairsemée du modèle tridimensionnel avant d'obtenir le modèle tridimensionnel (33).

3. Le procédé selon l'une quelconque des revendications précédentes, dans lequel le procédé comprend en outre la détection de correspondances de caractéristiques entre des caractéristiques (27) dans des groupes de trois images sphériques successives (21), dans lequel deux caractéristiques ($27_1$, $27_2$) de deux images sphériques différentes ($21_1$, $21_2$) sont appariées si des points (19) dans l'environnement qu'elles représentent coïncident entre eux, et l'utilisation des correspondances de caractéristiques et des points qu'elles définissent pour la création du modèle tridimensionnel (33) à partir d'un groupe respectif de trois images sphériques (21) uniquement si une correspondance de caractéristiques respective apparaît entre une première image ($21_1$) et une deuxième image ($21_2$), et également entre la deuxième image ($21_2$) et une troisième image ($21_3$) du groupe respectif de trois images sphériques.

4. Le procédé selon la revendication 3, dans lequel le procédé comprend en outre le calcul (219) des positions des points (19) dans l'environnement sur la base des correspondances de caractéristiques, et le calcul (219) d'une rotation ($29_1$, $29_2$) et d'une translation ($28_1$, $28_2$) respectives des images sphériques (21) l'une par rapport à l'autre dans le groupe respectif de trois images sphériques (21), les rotations et les translations décrivant la géométrie du groupe respectif de trois images sphériques (21).

5. Le procédé selon la revendication 4, dans lequel le procédé comprend en outre la fusion (221, 223, 225, 227, 229) des géométries des groupes de trois images sphériques (21) sur la base de leur rotation commune ($29_1$, $29_2$) et de leur translation ($28_1$, $28_2$) commune.

6. Le procédé selon l'une quelconque des revendications 3 à 5, dans lequel le procédé comprend en outre la comparaison (235) de positions de points définies par les correspondances de caractéristiques entre les premières et deuxièmes images ($21_4$, $21_2$) et les correspondances de caractéristiques entre les deuxièmes et troisièmes images ($21_2$, $21_3$) pour supprimer les positions de points qui ne définissent pas des points suffisamment similaires.

7. Le procédé selon l'une quelconque des revendications précédentes, dans lequel, avant de calculer le modèle tridimensionnel (33), le procédé comprend le transfert des premières et deuxièmes images vers une unité de traitement (S5) configurée pour calculer le modèle tridimensionnel (33).

8. Le procédé selon l'une quelconque des revendications précédentes, dans lequel le procédé comprend en outre la détermination de la vitesse du système mobile (S4) le long de la trajectoire, et/ou dans lequel la trajectoire est une boucle fermée, et/ou dans lequel le modèle tridimensionnel (33) est calculé une fois que la trajectoire a été complétée par le système mobile (S4).

9. Le procédé selon l'une quelconque des revendications précédentes, dans lequel la caméra omnidirectionnelle (S4) est déclenchée à des intervalles de distance constants le long de la trajectoire, et/ou dans lequel le procédé comprend en outre l'étalonnage (101) de la caméra omnidirectionnelle (S1).

10. Le procédé selon la revendication 9, dans lequel l'étalonnage comprend la modélisation de la distorsion des premier et/ou deuxième capteurs d'image (3, 5) et/ou l'alignement des premier et deuxième capteurs (3, 5) par rapport à un miroir de caméra (7) placé entre les capteurs de caméra.

11. Le procédé selon l'une quelconque des revendications précédentes, dans lequel le procédé comprend en outre le stockage (113) des premières et deuxièmes images avant d'obtenir les images sphériques (21).

12. Le procédé selon l'une quelconque des revendications précédentes, dans lequel la caméra omnidirectionnelle (S1) comprend un miroir (7) entre les premier et deuxième capteurs d'image (3, 5), et dans lequel le miroir comprend une première surface réfléchissante faisant face au premier capteur d'image (3), et une deuxième surface réfléchissante faisant face au deuxième capteur d'image (5), et/ou dans lequel la caméra omnidirectionnelle (S1) comprend un miroir (7) ayant son point focal principal au centre du miroir (7).

13. Le procédé selon la revendication 12, dans lequel au moins l'une des première et deuxième surfaces réfléchissantes est une hyperbole.

14. Le procédé selon l'une quelconque des revendications précédentes, dans lequel la première direction est opposée à la deuxième direction.

**15.** Un système pour créer un modèle tridimensionnel (33) de l'environnement, le système comprenant :

• une caméra omnidirectionnelle (S1) comprenant un premier capteur d'image (3) orienté dans une première direction pour capturer des premières images, et un deuxième capteur d'image (5) orienté dans une deuxième direction différente pour capturer des deuxièmes images ;
• un système mobile (S4) portant la caméra omnidirectionnelle (S1) ;
• un système de planification de trajectoire (S3) pour planifier une trajectoire pour le système mobile (S4) ;
• un système informatique (S2) permettant de déclencher la caméra omnidirectionnelle (S1) à des instants donnés en fonction de la vitesse du système mobile (S4) le long de la trajectoire pour capturer des premières et deuxièmes images ; et
• une unité de traitement (S5) pour obtenir des images sphériques (21) en combinant sélectivement les premières et deuxièmes images, et pour créer le modèle tridimensionnel (33) à partir des images sphériques (21), dans lequel l'unité de traitement (S5) est configurée pour filtrer (209, 211) des images sphériques (21) dont le déplacement de l'emplacement de capture par rapport à leur emplacement de capture d'image sphérique précédent et/ou suivant respectif le long de la trajectoire est inférieur à un seuil de déplacement, **caractérisé en ce que** le déplacement de l'emplacement de capture peut être obtenu en déterminant une valeur moyenne multipliée par un écart type des angles entre des directions des caractéristiques appariées entre les images sphériques (21) considérées, dans lequel deux caractéristiques ($27_1$, $27_2$) de deux images sphériques différentes ($21_1$, $21_2$) sont appariées si les points (19) de l'environnement qu'ils représentent coïncident entre eux, et dans laquelle une direction de caractéristique est la direction d'une caractéristique (27) définie par un vecteur (29) défini par un centre (9) de l'image sphérique (21) et la position de la caractéristique sur l'image sphérique (21) de telle sorte que la direction de caractéristique pointe à l'opposé du centre (9) de l'image sphérique (21).

**Fig. 1**

**Fig. 2**

**Fig. 3**

**Fig. 4**

**Fig. 5**

**Fig. 6**

S1

17

9

7

15

5

3

OA

h

h

**Fig. 7**

19

19

$27_2$

$27_1$

$27_2$

$27_2$

$27_4$

$27_3$

$27_5$

$21_3$

$21_2$

$21_1$

**Fig. 8**

$29_1$

$29_2$

$21_1$

$28_1$

$21_2$

$28_2$

$21_3$

**Fig. 9**

Calibrate camera — 101

Create directed graph of environment — 103

Create trajectory based on directed graph — 105

Advance camera along trajectory — 107

No ⟨ Trajectory accessible? ⟩ — 109
Yes

Trigger camera along trajectory to obtain sensor images — 111

Store sensor images — 113

115 — ⟨ Trajectory completed? ⟩ No
Yes

Convert sensor images into spherical images using camera calibration — 117

Compute 3D model based on spherical images — 119

⟨ End ⟩

**Fig. 10**

Create ordered list L1 of spherical images, referred to as L1[1], L1[2], etc. in the list — 201

Detect and extract features from images of list L1 — 203

Match features from sets of two successive images of list L1 — 205

Initialise list L2 with L1[1], and initialise parameters k & s: k=2, s=2 — 207

Displacement between images L1[k] and L1[k-1] greater than displacement threshold? — 209

No

Yes

Add current image L1[k] to ordered list L2, L2[s]=L1[k], and s=s+1 — 211

Update k: k=k+1 — 213

215 — k greater than size of list L1? No

Yes

To Fig. 11b

**Fig. 11a**

From Fig. 11a

Merge matched features from sets of three successive images of list L2 into triplet list T1 — 217

Determine geometry of triplets in T1 in terms of translations and rotations of images — 219

Initialise global geometry of 3D model by using triplet T1[1], and set k=2 — 221

Align triplets T1[k] and T1[k+1], and add them to global geometry — 223

Update k: k=k+1 — 225

No — k greater than size of list T1? — 227

Yes

Update k: k=1 — 229

To Fig. 11c

**Fig. 11b**

From Fig. 11b

Compute dense sets of matched features between second and first images, and second and third images in triplet T1[k] ⟋— 231

Compute optimal intersection of elements formed by matches of three features in dense sets ⟋— 233

Remove for triplet T1[k] non-coherent 3D points defined by optimal intersections from 3D representation defined by dense sets ⟋— 235

Update k: k=k+1 ⟋— 237

No ⟨ k greater than size of list T1? ⟩ ⟋— 239

Yes

Dense representations of all triplets are aligned in global geometry of 3D model to obtain final 3D model ⟋— 241

End

**Fig. 11c**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109509230 A

**Non-patent literature cited in the description**

- **R. MARTÍ et al.** A GRASP heuristic for the mixed Chinese postman problem. *In: European Journal of Operational Research*, 2002, vol. 142 (1), ISSN 0377-2217, 70-80
- **V. RAFANAVICIUS et al.** Efficient Path Planning Methods for UAVs Inspecting Power Lines. *In: 2017 International Conference on Platform Technology and Service (PlatCon)*, 2017, 1-6
- **ALCANTARILLA et al.** Fast Explicit Diffusion for Accelerated Features in Nonlinear Scale Spaces. *Proceedings of the British Machine Vision Conference 2013*, September 2013
- **JIAWANG BIAN et al.** GMS: Grid-based Motion Statistics for Fast, Ultra-robust Feature Correspondence. *IEEE Conference on Computer Vision and Pattern Recognition*, 2017
- **ARUN et al.** Least-squares fitting of two 3-D point sets. *IEEE Transactions on pattern analysis and machine intelligence*, 1987, vol. 5, 698-700
- Video++, a modern image and video processing C++ framework. **MATTHIEU GARRIGUES** ; **ANTOINE MANZANERA**. In: Design and Architectures for Signal and Image Processing (DASIP), 2014 Conference on. IEEE, 2014, 1-6
- **CE LIU et al.** Beyond pixels: exploring new representations and applications for motion analysis. *PhD thesis, Massachusetts Institute of Technology*, 2009